# EUROPEAN PATENT SPECIFICATION

(11) **EP 2 032 426 B1**
(45) Date of publication and mention of the grant of the patent: **30.03.2016**
(21) Application number: 07747655.4
(22) Date of filing: 08.06.2007
(51) Int. Cl.: B63B 27/25, B65D 88/72, B63B 25/08, B63B 27/22, B63B 27/24, B65G 53/22, B65G 67/60

(54) **SYSTEM AND METHOD FOR DISCHARGE OF BULK MATERIAL FROM A SHIP**
SYSTEM UND VERFAHREN ZUM ENTLEEREN VON SCHÜTTGUT VON EINEM SCHIFF
SYSTÈME ET PROCÉDÉ POUR DÉCHARGEMENT DE MATÉRIAU EN VRAC DEPUIS UN BATEAU

(30) Priority: 09.06.2006 NO 20062650
(43) Date of publication of application: 11.03.2009
(73) Proprietor: Kristian Gerhard Jebsen Skipsrederi A/S, 5147 Fyllingsdalen - Bergen (NO)
(72) Inventor: HUMLESTØL, Oddleiv Arne, N-5355 Knarrevik (NO)
(74) Representative: Øvsttun, Trond
(86) International application number: PCT/NO2007/000197
(87) International publication number: WO 2007/142534

(56) References cited:
- WO-A1-01/25121
- WO-A1-92/06026
- DE-A1- 2 229 412
- GB-A- 2 219 784
- US-A- 2 686 083
- US-A- 4 152 029
- US-A1- 2003 223 827

## Description

The present invention relates to a system and a method for unloading a powdery cargo from a ship, the system comprising a ship, wherein the ship comprises one or more cargo holds in which the bottom tapers down towards a central point in the cargo hold, and also a fluidisation arrangement for fluidisation of the powdery cargo in the cargo hold so that the cargo flows towards said central point in the cargo hold, the system further comprising a pneumatic unloading pump being arranged in or adjacent the central point in the cargo hold at least partially below the bottom of the cargo hold, and that the pump is arranged to directly receive the fluidised powdery cargo.

Vessels that operate in the bulk market for powdery cargoes are equipped with a variety of what is available of unloading appliances. The invention is particularly related to cement carrying vessels, but can, of course, also be used for other powdery cargoes such as fly ash, milk of lime and the like.

The unloading appliances that are used in the cement carrying fleet can be divided into two main groups: Mechanical unloading appliances and pneumatic unloading appliances.

A mechanical unloading appliance is characterised in that all transport occurs mechanically. The mechanical transport can be a bucket elevator that transports cargo in buckets with the help of chain propulsion. Another type of mechanical transport is a screw conveyor that is comprised of a screw surrounded by a casing. Cement is fed into one end and "screwed" out at the other end of the casing. A chain transporter can also be used in mechanical transport.

A pneumatic unloading appliance is characterised in that air is used for transport of the cargo. The cargo is transported in closed systems with the help of compressed air or a vacuum. The characteristics of the two main types of unloading systems differ in that a mechanical system can only unload into a receptacle in the immediate vicinity of the vessel while a pneumatic system can, through pipelines, deliver to receptacles for example 600-800 meters from the vessel.

On board vessels that carry cement in bulk one will be able to find completely mechanical appliances or completely pneumatic appliances, but also a combination of these. The majority of cement-carrying ships encompass ships with pneumatic unloading systems to the shore.

Common to all pneumatic unloading systems that are installed on board a vessel is that the unloading process itself is carried out in three operations on board before the cargo is delivered through the pipeline to an installation ashore.

### Step 1.

The cement in the cargo hold must, during the unloading, be brought centrally to the bottom of the cargo holds or to central points at the same height outside the holds. A central point will be where the suction end of a vacuum system is placed, or at the inlet point for a mechanical screw/chain/bucket elevator system. When air is added to cement, the cement changes character and behaves similarly to a liquid. To utilise this characteristic of cement, the bottom of the cargo holds normally has an incline of around 6-7 degrees and is fitted with fluidisation panels. By blowing air through these panels the cement will fluidise and flow towards the lowest point.

### Step 2.

After the cement has been brought to the central point in or outside the cargo holds the cement is transported in step 2 up to be filled into the unloading pumps. In traditional installations this normally takes place with the help of a vacuum system that sucks the cement up to a filter tank. The cement is thereafter dropped down into an unloading pump. A mechanical system (for example, a screw conveyor or a bucket elevator) is also much used to lift the cement up into a hopper tank before it is dumped down into an unloading pump.

### Step 3.

When an unloading pump has been filled up with cement the inlet is closed and compressed air (for example, at 2-7 bar) is added. When the unloading pump is pressurised the outlet is opened and the cement is blown ashore to the receiving silos/stores etc.

For a ship with an unloading capacity of about 400 metric tonnes per hour, the energy consumption in a traditional, pneumatic, unloading appliance will be as follows for each operation:
1. Centralisation of the cement: about 100 kW (10%)
2. Transport of cement to the pumps: about 300 kW (30%)
3. Blowing the cement ashore: about 600 kW (60%)

The energy consumption will vary for point 3 in relation to the distance and height that the cement shall be transported after it leaves the ship. The energy consumption will be approximately constant for points 1 and 2, independent of variations in point 3.

The above mentioned is based on the most used systems on the market for handling of cement on board vessels.

From prior art attention is given to, among others, GB A 2219784, which relates to an unloading appliance for bulk material where a ship's tank or container has a bottom that tapers down towards a central point and where there are fluidisation nozzles in the bottom. Furthermore, a pump is arranged below the tank. However, the pump described in GB A 2219784 is an ejector pump that cannot be pressurised. The pump according to the invention is not an ejector pump but is an especially developed pressure tank pump with side filling, which results in completely other performances than an ejector pump which has large limitations with regard to effect, transportation lengths and transportation heights.

Thus, this document only represents the features of the preamble of present independent claim 1.

Furthermore, the container in said GB document lacks ventilation fans to vent the air from the cargo hold when pneumatic unloading systems are used to load the cargo to the hold. The present system can have fans to pull the air out from the cargo hold combined with a dust filter with a capacity up to 1000 metric tonnes per hour. The container in said GB document has a bottom incline with an angle of 20-35 degrees to transport the powdery cargo down to a central point. With the present system the hold bottom only needs a slope of, for example, 6-8 degrees for the same operation (this is also the case for the pressure tank pump). In the known solution a number of nozzles are fitted in the bottom of the container for fluidisation of the cement. In the present system there is no need for these nozzles. The container in said GB document can, as mentioned, not be pressurised. As a consequence of this the unloading rate (metric tonnes per hour) will be very low and, at long transportation lengths and high silos with back pressure, the system will not work.

Therefore it can be associated with considerable risk for a ship to use the system described in said GB document. If the unloading pipeline gets blocked with cement, or valves or the jet pump are closed, all air will go back to the cargo hold and is able to lead to damage on the ship. In the present system the delivery ashore is brought about by a pressure tank, which is separated from the cargo hold with valves, and is monitored so that the system is prevented from causing such damage.

The known system has no way of adjusting the amount of air in relation to cement which is necessary to get an optimal mixture and the highest possible rate of unloading per consumed kW. The present system can be adapted to the different types of cargo receiving systems and be adjusted for optimal unloading with the use of its associated nozzle system for fluidisation and also adjustable tank pressure.

Today, there is one type of unloading pump based on overpressure that can be placed centrally in a cargo hold. This is a two-step pump where the powdery cargo is fed into a pressure chamber with the help of a horizontal screw. Manufacturers of this type of pump are, amongst others, Fuller-Kinyon, Claudius Peters and Ibau. The feeding screw in a two-step pump has an energy consumption corresponding to about 25% of the total effect of an unloading installation. In comparison, the pressure tank pump according to the present invention is a one-step pump that is filled with the help of gravitational forces (without use of energy).

A pressure tank pump is basically known previously and is built as a pressure tank having a cylindrical part and a ball-formed and/or a cone-formed part at the ends. For the pressure tank to work effectively, different forms of equipment for the fluidisation of the cargo must be fitted inside the tank so that when the tank is pressurised the powdery cargo is blown out together with the air to a desired place, for example, from a ship to a cement terminal/silo ashore. Common to such pressure tanks is that if they are to function effectively and be emptied quickly they should be fitted vertically and the height of installation is then relatively large. All existing systems with pressure tanks are filled at the top of the tank. Such existing systems use energy corresponding to about 25% or more for the filling of the pressure tank.

An object with the invention is to promote a pressure tank pump with side filling and which can be placed centrally in the bottom on a ship carrying cement. The present pump can, as a result of this, be directly filled from the cargo hold without the use of energy. Although the pump has side filling, full filling of the pump is achieved or to a level corresponding to that in the cargo hold.

A further advantage with the side filling compared with filling at the top is that it is not necessary to lift up the bottom of the cargo hold. The ship then does not lose volume in the cargo hold and at the same time the ship's stability is intact.

A further object of the present invention is to find simpler and better solutions for handling of a powdery cargo, such as cement, and then with a focus on a pneumatic system which reduces the energy consumption, discharges, costs and possibly unloading time for the ship's powdery cargo.

The difference between traditional pneumatic unloading systems and the system which is developed according to the present invention is primarily that step two has been removed. This is achieved by placing a newly developed unloading tank centrally under or in the cargo hold bottom. When the cement in the cargo hold is fluidised, the cement flows into the pump which is thereby filled due to gravitational forces. The patent-applied unloading appliance described here has consequently only two sequences in the unloading chain which use energy, i.e. fluidisation of the cement in the cargo holds and transportation of the cement via unloading lines to the receiving installation. All other pneumatic, pressurised unloading appliances have at least one sequence more in the unloading chain that uses energy. Transportation of cement is normally carried out with a Flux pump or a Fuller pump. A Flux pump is a tank that is filled with cement and pressurised with air that blows the cement via a pipeline to a receiving installation. A Fuller pump is a cement unloading pump that comprises a screw which, with the help of energy, screws the cement into a chamber where it is supplied air to blow the cement via a pipeline to a receiving installation.

The advantages of the new unloading system with regard to other systems are, in the main: A reduction in energy consumption of about 30% during unloading. A reduction in emission of climatic gases during loading of about 30%. A reduction in costs of about 25% in connection with installation of a cement appliance. Maintenance costs for unloading equipment are reduced by about 25%. Increased operational safety due to fewer components that can lead to disturbances in operation. It is pointed out that the above-mentioned values are only estimates.

In connection with the development of the new unloading system there have been a number of challenges and problems that have required new technical solutions. To optimise the unloading installation and avoid a reduced hold volume, a continuous modification and further development of the unloading pump has been necessary. All existing unloading tanks that are not combined with a vacuum tank are filled at the top. To achieve a large enough tank and efficient unloading it was necessary to develop a tank/pump with, preferably, side filling. The tank/pump was also modified in the bottom with regard to the piping arrangement for compressed air in and outlet for cement and air. This was done to reduce the building height of the tank. Internally, the tank is fitted with a newly developed nozzle that is used for fluidisation of the cement in the tank.

The above-mentioned objects are met with a system as defined in the independent claim 1, where the system is characterised in that the unloading pump is a pressure tank pump, where the side wall of the pump comprises at least one inlet for the powdery cargo, at a height which, in the main, corresponds to the direction of flow for the powdery cargo, whereby the powdery cargo flows into the pump with the help of gravitational forces and more or less fills the pump completely or to a level corresponding to that of the cargo hold, and that the pump after filling is arranged to be pressurised to blow said cargo ashore.

Preferred alternative embodiments of the system are characterised by the dependent claims 2-8.

The unloading pump can be arranged in and surrounded by a pump housing.

The fluidisation arrangement can at least partially be made up of the bottom of the cargo hold comprising a number of valves/panels set up for supply of air for the fluidisation of the powdery cargo in the cargo hold.

Furthermore, the inlet of the unloading pump preferably comprises a closing valve.

The unloading pump preferably comprises at least one unloading outlet for transport of the powdery cargo ashore, via a pipeline, and at least one compressed air inlet set up to receive air to pressurise the pump and to supply compressed air during unloading, where the compressed air inlet of the pump terminates inside the unloading outlet. The unloading pump can further comprise at least one air opening for venting of air in the pump during the filling of the pump with powdery cargo.

The unloading pump can also comprise at least one inlet for supply of fluidisation air to internal fluidisation panels in a lower part of the pump. Furthermore, the unloading pump can comprise at least one inlet for supply of air to nozzles arranged internally in the side wall or centre of the pump, set up to air-flush the powdery cargo that may have become stuck in the pump.

The invention also relates to, as mentioned, a two-step method for unloading of powdery cargo from a ship, and is characterised by the steps defined in the independent claim 9, in
that the powdery cargo is led in a first step directly from the cargo hold to at least one side inlet of a pneumatic pressure tank pump placed in or adjacent the central point of the cargo hold, and to vent air in the pump during the filling of the powdery cargo in the pump, whereby the pump is filled completely or to a level corresponding to that of the cargo hold, and
that compressed air is supplied to the pump in a second step to pressurise the pump internally when the pump is filled with the desired amount of powdery cargo, and to blow the powdery cargo ashore with the help of said compressed air.

Alternative preferred embodiments of the method are characterised by the dependent claims 10-12. During the blowing out of the powdery cargo a constant stream of compressed air can be supplied. Furthermore, the powdery cargo in a lower part of the unloading pump can be fluidised with the help of an adjacent fluidisation arrangement to lead the powdery cargo to an unloading outlet.

Powdery cargo that has become fixed in the pump can be air-flushed or broken up with the help of air from a number of nozzles fitted internally in the pump, as the nozzles are supplied air via an inlet in the pump.

The invention shall now be described with the help of the enclosed figures in which;
Figure 1 shows a cross-section of a cargo hold with an unloading pump according to the invention.
Figure 2 shows a side view of an unloading pump according to the invention.
Figure 3 shows a side view of the unloading pump shown in figure 2.
Figure 4 shows a top view of the unloading pump shown in figures 2 and 3.
Figure 5 shows an internal section of the unloading pump shown in the figures 2-4.
Figure 6 shows a longitudinal section of a ship with a number of cargo holds comprising an unloading pump in accordance with the invention.
Figure 7 shows a closer section of two of the cargo holds shown in figure 6.

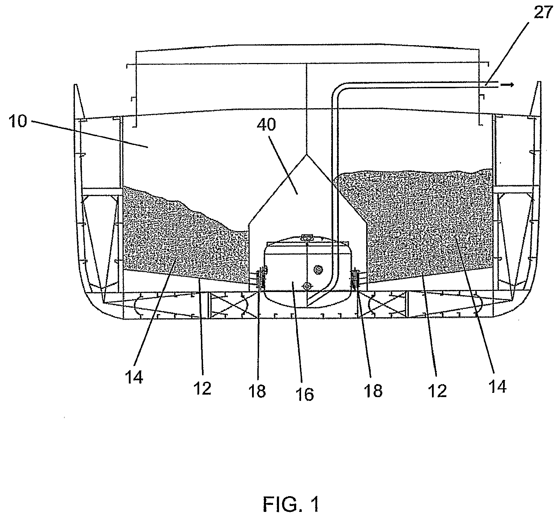

Figure 1 shows a cross-section of a cargo hold 10 in a vessel 50 for transport of bulk cargo, such as raw materials in the form of a powdery cargo, for example, cement 14. As can be seen, the cargo hold 10 comprises a cargo hold bottom 12 that tapers toward a central point in the cargo hold 10. A fluidisation arrangement is preferably arranged in the cargo hold bottom 12 for fluidisation of the powdery cargo 14 in the cargo hold 10. The fluidisation arrangement makes the cargo flow toward said central point in the cargo hold. Such a fluidisation arrangement is basically known and works such that when air is added to the powdery cargo, the cargo's character changes and almost obtains the properties of a "fluid". To take advantage of this property, the bottom of the cargo hold normally has a fluidisation panel, and by blowing air through these panels, the powdery cargo will be fluidised and "flow" toward the lowest point. According to the invention the fluidisation arrangement is preferably made up of, at least partially, the cargo hold bottom 12 comprising a number of valves/panels arranged for supply of air for the fluidisation of the powdery cargo 14 in the cargo hold 10.

As previously mentioned, after the powdery cargo has been brought to the central point in, or outside the cargo holds, it has been normal to transport the cargo up for filling in the unloading pumps. In traditional installations this has taken place, for example, with the help of a vacuum system which sucks the cement up to a filter tank or with the help of a screw/bucket elevator, after which the powdery cargo is released down into an unloading pump. In the present invented system, contrary to known solutions, a pneumatic unloading pump 16 is arranged in or adjacent the central point in the cargo hold 10, such that the unloading pump 16 is set up to directly receive the fluidised powdery cargo 14, preferably via an inlet 18. Thereafter the powdery cargo is put under pressure to blow the said cargo 14 directly ashore, via a pipeline 27.

The unloading pump is a pressure tank pump with side filling and which can be placed centrally in the bottom of a cement-carrying ship, developed to receive a powdery cargo, such as cement, directly from the cargo holds with side inlets for filling of the pumps, preferably completely or until a level corresponding to the cement level in the cargo holds. The unloading pumps can be placed in or beside the cargo holds and can thereby be filled directly from the holds without the use of energy. Even if the pumps have side filling, full filling of the pumps is achieved or to a level corresponding to that in the cargo hold.

In a preferred embodiment (as shown in figure 1) the unloading pump 16 can be arranged, at least, partially under the bottom 12 of the cargo hold. The unloading pump 16 can further be arranged in and surrounded by an outer pump housing 40 to ease access to the unloading pump, for both maintenance and for supply of essential pipes and/or wires. The pump housing 40 will also function as a barrier against the cargo.

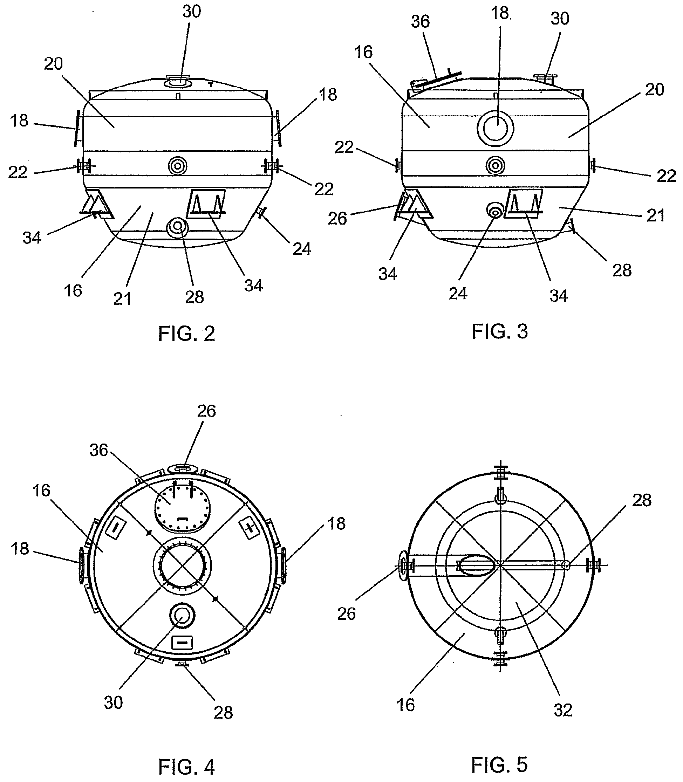

The figures 2-4 show the invented unloading pump which forms part of the system, from different angles. The unloading pump 16 is preferably formed as a closed housing with a number of inlets 18 to receive the powdery cargo. In the shown example, there are two inlets 18 to receive the powdery cargo from separate sides of the cargo hold 10. Of course, there can be fewer or more than two inlets, dependent on the type of cargo and/or the shape of the cargo hold. The mentioned inlet 18 can be arranged in the side wall 20 of the unloading pump and at a height which, in the main, corresponds to the flow direction of the powdery cargo 14, such that the powdery cargo 14, with the help of gravitational forces, flows into the unloading pump 16, i.e. the powdery cargo "flows by itself" into the unloading pump. To control the inflow of the powdery cargo and the closing of the pump, the preferred inlet 18 of the unloading pump comprises a closing valve (shown in Fig. 1)

Furthermore, the unloading pump 16 comprises at least one lower, unloading outlet 26 for transport of the powdery cargo 14 ashore. The lower, unloading outlet 26 is preferably arranged in a lower, bowl-shaped part 21 of the unloading pump. The transport of the cargo preferably goes via a vertical pipeline 27. For supply of compressed air the unloading pump comprises at least one compressed air inlet 28 arranged to receive air to pressurise the pump and to supply compressed air during unloading. The compressed air inlet 28 can end inside the unloading outlet 26, such as shown in figure 5, or alternatively be arranged in another appropriate manner, and can have a similar effect corresponding to that of a Venturi. In that respect, it shall be noted that all mentioned inlets/outlets in this application can be arranged in another way than that which is shown in the figures.

The unloading pump 16 also comprises at least an upper air opening 30 for venting of air in the pump 16 during filling of the pump with a powdery cargo 14. For inspection and maintenance the pump can also comprise an upper, access hatch 36.

As mentioned, the cargo hold 10 preferably comprises at least one fluidisation arrangement. It can also be advantageous that the unloading pump 16 comprises such an arrangement for fluidisation of the powdery cargo. In this instance the unloading pump can comprise at least one inlet 24 for supply of fluidisation air to internal fluidisation panels 32 in a lower part of the pump 16. Each panel 32 can comprise or be covered with an air permeable material, and the panels can be supplied with compressed air from the under side. This arrangement contributes primarily to fluidisation of the powdery cargo during unloading from the unloading pump. Additionally, the unloading pump 16 can comprise at least one inlet 22 for supply of air to a number of nozzles arranged internally in the side wall 20 of the pump, or other of the pump's walls, arranged to air-flush, i.e.preferably "cut through" the powdery cargo 14 that may have become stuck in the pump. The unloading pump also preferably comprises fastening brackets 34, or the like, for fastening of the unloading pump in the cargo hold/pump housing.

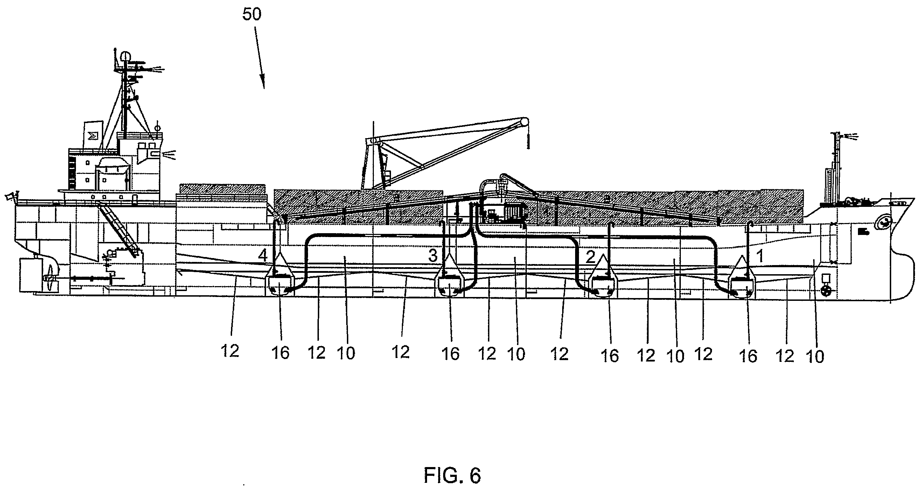

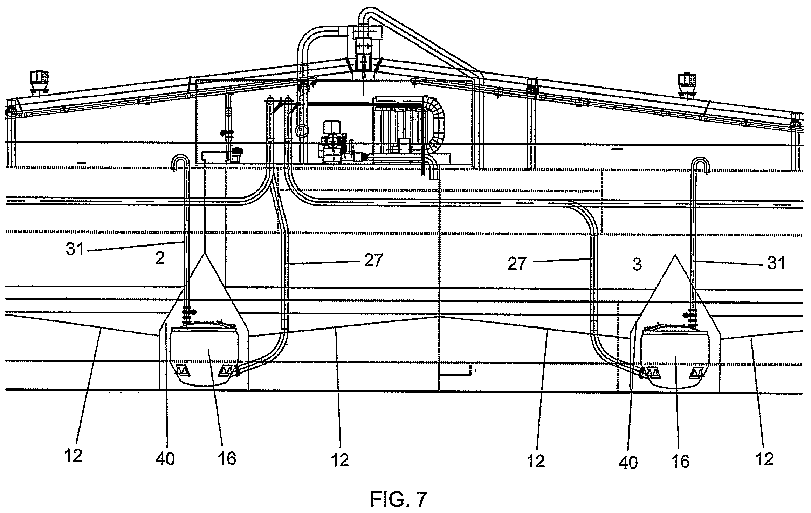

Figure 6 shows an example of a vessel with a number of cargo holds in accordance with the invention. The figure shows a partial section in longitudinal direction of the vessel. In the shown example, there are four cargo holds marked 1-4, and, as is evident, the unloading pipe 27 runs from each of the unloading pumps preferably to a central manifold on the main deck, from where the cargo is further transferred ashore. Figure 7 shows a further section of figure 6 with two adjacent cargo holds marked 2 and 3. The unloading pump 16 comprises, as mentioned, at least one air opening 30 for venting of air in the pump 16 during filling of the pump with a powdery cargo 14, and as is evident from figure 6 especially an evacuation pipe 31 is arranged to the mentioned air opening, where the pipe 31 runs preferably vertically up to a point above the deck with a return to the cargo hold. In the shown example, the pipe 31 has a bend in the free, upper end.

Initially, the unloading pump shall only be operational during unloading of the cargo, in that it is not the intention that the pump shall be filled during sailing. During unloading of the powdery cargo the cargo is first fluidised such that it flows towards the said central point in the cargo hold. Thereafter, the powdery cargo 14 is led directly to the pneumatic unloading pump 16 placed in or adjacent the central point in the cargo hold 10. During supply of the powdery cargo in the pump, existing air in the pump is preferably vented. When the unloading pump is full or filled to the desired level, compressed air is supplied to the unloading pump 16 to internally pressurise the pump and thereafter the powdery cargo 14 is blown ashore with the help of said compressed air. During blowing out of the powdery cargo 14 a constant stream of compressed air is preferably supplied.

Steering systems for control of supply/discharge of cargo in the pump, supply/venting of air in the pump and supply of air to the fluidisation arrangements will, in the main, be comprised of known systems and will not be explained in more detail in that these are regarded as known by one skilled in the arts.

## Claims

1. System for unloading of a powdery cargo (14) from a ship (50), the system comprising a ship, the ship comprising one or more cargo holds (10) with a cargo hold bottom (12) which tapers towards a central point in the cargo hold (10), and also a fluidisation arrangement for fluidising the powdery cargo (14) in the cargo hold (10) such that the cargo flows towards said central point in the cargo hold, the system further comprising a pneumatic unloading pump (16) being arranged in or adjacent the central point in the cargo hold (10) at least partially under the bottom (12) of the cargo hold and that the unloading pump (16) is set up to directly receive the fluidised powdery cargo (14), **characterised in that** the unloading pump is a pressure tank pump, where the side wall (20) of the pump (16) comprises at least one inlet (18) for the powdery cargo (14), with the inlet (18) at height corresponding with the cargo hold bottom (12), wherein the powdery cargo (14), with the help of gravitational forces, flows into the pump (16) and fills the pump completely or to a level corresponding to that of the cargo hold, and that the pump (16) after filling is arranged to be pressurised to blow said cargo (14) ashore.

2. System according to claim 1, **characterised** i n that the unloading pump (16) is arranged in and surrounded by a pump housing (40).

3. System according to claim 1, **characterised** i n that the fluidisation arrangement is at least partially formed in that the bottom (12) of the cargo hold comprises a number of valves/panels arranged for supply of air for fluidisation of the powdery cargo (14) in the cargo hold (10).

4. System according to claim 2, **characterised in that** the inlet (18) of the unloading pump comprises a closing valve.

5. System according to one or more of the preceding claims, **characterised in that** the unloading pump (16) comprises at least one unloading outlet (26) for transport of the powdery cargo (14) ashore, via a pipeline (27), and at least one compressed air inlet (28) arranged to receive air to pressurise the pump and to supply compressed air during unloading, where the compressed air inlet (28) ends internally in the unloading outlet (26).

6. System according to claim 5, **characterised in that** the unloading pump (16) comprises at least one air opening (30) for venting of air in the pump (16) during filling of the pump with a powdery cargo (14).

7. System according to claims 5 or 6, **characterised in that** the unloading pump (16) comprises at least one inlet (24) for supply of fluidisation air to internal fluidisation panels (32) in a lower part of the pump (16).

8. System according to claims 5, 6 or 7, **characterised in that** the unloading pump (16) comprises at least one inlet (22) for supply of air to nozzles arranged internally in the side wall (20) of the pump, set up to air-flush the powdery cargo (14) that may have become stuck in the pump.

9. Method for a two-step unloading of a powdery cargo (14) from a ship (50), where the ship comprises one or more cargo holds (10) with a bottom (12) of the cargo hold that tapers towards a central point in the cargo hold (10) where an unloading pump (16) is arranged, in that the powdery cargo (14) in the cargo hold (10) is fluidised such that the cargo flows towards said central point in the cargo hold, **characterised in:**
**that** in a first step, the powdery cargo (14) is led directly from the cargo hold to a side inlet (18) of a pneumatic pressure tank pump (16) placed in or adjacent the central point in the cargo hold (10), and to vent air in the pump during filling of the powdery cargo in the pump, wherein the pump (16) is filled completely or to a level corresponding to that of the cargo hold (10), and
**that** in a second step, compressed air is supplied to the pump (16) to pressurise the pump internally when the desired amount of powdery cargo (14) is filled into the pump, and to blow the powdery cargo (14) ashore with the help of said compressed air.

10. Method according to claim 9, **characterised in that** during blowing out of the powdery cargo (14) a constant stream of compressed air is supplied.

11. Method according to claim 9, **characterised in that** the powdery cargo (14) in a lower part of the pump (16) is fluidised with the help of an adjacent fluidisation arrangement (32) to lead the powdery cargo to an unloading outlet (26).

12. Method according to claims 9-11, **characterised in that** powdery cargo (14) which has got stuck in the pump, is air-flushed with the help of air from a number of nozzles mounted internally in the pump (16), **in that** the nozzles supply air via an air inlet (22) in the pump.

## Patentansprüche

1. System zum Entladen einer pulverförmigen Ladung (14) von einem Schiff (50), wobei das System ein Schiff umfasst, und das Schiff einen oder mehrere Laderäume (10) mit einem Laderaumboden (12), der zu einem zentralen Punkt im Laderaum (10) spitz zuläuft, und auch eine Fluidisierungsanordnung zum Fluidisieren der pulverförmigen Ladung (14) im Laderaum (10) enthält, so dass die Ladung zum zentralen Punkt im Laderaum fließt, wobei das System ferner eine pneumatische Entladepumpe (16) umfasst, welche an oder neben dem zentralen Punkt im Laderaum (10) zumindest teilweise unter dem Boden (12) des Laderaums angeordnet ist, und die Entladepumpe (16) eingerichtet ist, um direkt die fluidisierte pulverförmige Ladung (14) zu empfangen, **dadurch gekennzeichnet, dass** die Entladepumpe eine Druckbehälterpumpe ist, wobei die Seitenwand (20) der Pumpe (16) mindestens einen Einlass (18) für die pulverförmige Ladung (14) enthält, wobei der Einlass (18) sich auf einer Höhe entsprechend dem Laderaumboden (12) befindet, wobei die pulverförmige Ladung (14) mit Hilfe der Schwerkraft in die Pumpe (16) fließt und die Pumpe vollständig oder bis zu einem dem Pegel des Laderaums entsprechenden Pegel füllt, und dass die Pumpe (16) nach dem Füllen angeordnet ist, um unter Druck gesetzt zu werden, um die Ladung (14) an Land zu blasen.

2. System nach Anspruch 1, **dadurch gekennzeichnet, dass** die Entladepumpe (16) in einem Pumpengehäuse (40) angeordnet und von diesem umgeben ist.

3. System nach Anspruch 1, **dadurch gekennzeichnet, dass** die Fluidisierungsanordnung zumindest teilweise so geformt ist, dass der Boden (12) des Laderaums eine Anzahl von Ventilen/Platten enthält, die für die Luftversorgung zur Fluidisierung der pulverförmigen Ladung (14) im Laderaum (10) angeordnet sind.

4. System nach Anspruch 2, **dadurch gekennzeichnet, dass** der Einlass (18) der Entladepumpe ein Schließventil enthält.

5. System nach einem oder mehr der vorhergehenden Ansprüche, **dadurch gekennzeichnet, dass** die Entladepumpe (16) mindestens einen Entladeauslass (26) für den Transport der pulverförmigen Ladung (14) an Land über eine Rohrleitung (27) und mindestens einen Drucklufteinlass (28) enthält, der angeordnet ist, um Luft zum Unterdrucksetzen der Pumpe zu empfangen und um Druckluft während des Entladens zu liefern, wobei der Drucklufteinlass (28) innen im Entladeauslass (26) endet.

6. System nach Anspruch 5, **dadurch gekennzeichnet, dass** die Entladepumpe (16) mindestens eine Luftöffnung (30) enthält, um Luft in der Pumpe (16) während des Füllens der Pumpe mit einer pulverförmigen Ladung (14) abzuleiten.

7. System nach den Ansprüchen 5 oder 6, **dadurch gekennzeichnet, dass** die Entladepumpe (16) mindestens einen Einlass (24) zur Lieferung von Fluidisierungsluft an innere Fluidisierungsplatten (32) in einem unteren Teil der Pumpe (16) enthält.

8. System nach den Ansprüchen 5, 6 oder 7, **dadurch gekennzeichnet, dass** die Entladepumpe (16) mindestens einen Einlass (22) zur Lieferung von Luft an innen in der Seitenwand (20) der Pumpe angeordnete Düsen enthält, die eingerichtet sind, um die möglicherweise in der Pumpe steckengebliebene pulverförmige Ladung (14) mit Luft zu spülen.

9. Verfahren für eine zweistufige Entladung einer pulverförmigen Ladung (14) von einem Schiff (50), wobei das Schiff einen oder mehrere Laderäume (10) enthält, wobei ein Boden (12) des Laderaums zu einem zentralen Punkt im Laderaum (10) spitz zuläuft, wo eine Entladepumpe (16) angeordnet ist, wobei die pulverförmige Ladung (14) im Laderaum (10) fluidisiert wird, so dass die Ladung zum zentralen Punkt im Laderaum fließt, **dadurch gekennzeichnet, dass**:
in einem ersten Schritt die pulverförmige Ladung (14) direkt vom Laderaum zu einem Seiteneinlass (18) einer pneumatischen Druckbehälterpumpe (16) geführt wird, die an oder neben dem zentralen Punkt im Laderaum (10) angeordnet ist, und um Luft in der Pumpe während des Füllens der pulverförmigen Ladung in der Pumpe abzuleiten, wobei die Pumpe (16) vollständig oder bis auf einen Pegel gefüllt wird, der demjenigen des Laderaums (10) entspricht, und dass
in einem zweiten Schritt Druckluft an die Pumpe (16) geliefert wird, um die Pumpe innen unter Druck zu setzen, wenn die gewünschte Menge pulverförmiger Ladung (14) in die Pumpe gefüllt ist, und um die pulverförmige Ladung (14) mit Hilfe der Druckluft an Land zu blasen.

10. Verfahren nach Anspruch 9, **dadurch gekennzeichnet, dass** während des Ausblasens der pulverförmigen Ladung (14) ein konstanter Strom Druckluft geliefert wird.

11. Verfahren nach Anspruch 9, **dadurch gekennzeichnet, dass** die pulverförmige Ladung (14) in einem unteren Teil der Pumpe (16) mit Hilfe einer benachbarten Fluidisierungsanordnung (32) fluidisiert wird, um die pulverförmige Ladung zu einem Entladeauslass (26) zu führen.

12. Verfahren nach den Ansprüchen 9-11, **dadurch gekennzeichnet, dass** pulverförmige Ladung (14), die in der Pumpe steckengeblieben ist, mit Hilfe von Luft von einer Anzahl von Düsen luftgespült wird, die innerhalb der Pumpe (16) montiert sind, indem die Düsen Luft über einen Lufteinlass (22) in die Pumpe liefern.

## Revendications

1. Système de déchargement d'un chargement poudreux (14) d'un bateau (50), où le système comprend un bateau, où le bateau comprend une ou plusieurs soutes (10) avec un fond de soute (12) qui est conique vers un point central dans la soute (10) de chargement, ainsi qu'un arrangement de fluidification pour fluidifier le chargement poudreux (14) dans la soute (10), de manière à ce que le chargement coule vers le point central de la soute de chargement, où le système comprend en outre une pompe pneumatique de déchargement (16) étant placée dans ou à côté du point central de la soute (10) au moins partiellement sous le fond (12) de la soute et que la pompe de déchargement (16) est installée pour recevoir directement le chargement poudreux fluidifié (14), **caractérisé en ce que** la pompe de déchargement est une pompe à réservoir sous pression, où la paroi latérale (20) de la pompe (16) comprend au moins une entrée (18) pour le chargement poudreux (14), avec l'entrée (18) à une hauteur correspondant au fond de la soute (12), **en ce que** le chargement poudreux (14), avec l'aide des forces gravitationnelles, circule dans la pompe (16) et remplit complètement la pompe ou à un niveau correspondant à celui de la soute, et la pompe (16) après remplissage est arrangée pour être pressurisée pour décharger le dit chargement (14) à terre.

2. Système selon la revendication 1, **caractérisé en ce que** la pompe de déchargement (16) est placée dans et entourée par une enveloppe de pompe (40).

3. Système selon la revendication 1, **caractérisé en ce que** l'arrangement de fluidification est au moins partiellement formé de manière **en ce que** le fond (12) de la soute comprend un certain nombre de valves/panneaux disposés pour apporter de l'air afin de fluidifier le chargement poudreux (14) dans la soute (10).

4. Système selon la revendication 2, **caractérisé en ce que** l'entrée (18) de la pompe de déchargement comprend une valve de fermeture.

5. Système selon l'une ou plusieurs des revendications précédentes, **caractérisé en ce que** la pompe de déchargement (16) comprend au moins une sortie de déchargement (26) pour le transport du chargement poudreux (14) à terre, via un tuyau (27), et au moins une entrée d'air comprimé (28) placé pour recevoir de l'air pour pressuriser la pompe et pour fournir de l'air comprimé pendant le déchargement, où l'entrée d'air comprimé (28) se termine à l'intérieur dans la sortie de déchargement (26).

6. Système selon la revendication 5, **caractérisé en ce que** la pompe de déchargement (16) comprend au moins une ouverture d'aération (30) pour la circulation d'air dans la pompe (16) pendant le remplissage de la pompe avec un chargement poudreux (14).

7. Système selon les revendications 5 ou 6, **caractérisé en ce que** la pompe de déchargement (16) comprend au moins une entrée (24) pour l'alimentation d'air de fluidification aux panneaux internes de fluidification (32) au niveau d'une partie basse de la pompe (16).

8. Système selon les revendications 5, 6 ou 7, **caractérisé en ce que** la pompe de déchargement (16) comprend au moins une entrée (22) pour alimenter en air les buses arrangées à l'intérieur de la paroi latérale (20) de la pompe, réglées pour évacuer le chargement poudreux (14) qui pourrait être bloqué dans la pompe.

9. Méthode de déchargement en deux étapes d'un chargement poudreux (14) d'un bateau (50), où le bateau comprend une ou plusieurs soutes (10) avec un fond (12) de la soute conique vers un point central de la soute (10) où une pompe de déchargement (10) est placée, dans laquelle le chargement poudreux (14) dans la soute (10) est fluidifié de manière à ce que le chargement coule vers le dit point central dans la soute, **caractérisée en ce que** :
dans une première étape, le chargement poudreux (14) est conduit directement de la soute à une entrée latérale (18) d'une pompe pneumatique (16) à réservoir sous pression placée dans ou adjacente au point central dans la soute (10), et pour faire circuler de l'air dans la pompe pendant le remplissage de la pompe par le chargement poudreux, où la pompe (16) est remplie complètement ou jusqu'à un niveau correspondant à celui de la soute (10), et
**en ce que** dans une deuxième étape, de l'air comprimé est fourni à la pompe (16) pour pressuriser l'intérieur de la pompe quand la quantité souhaitée de chargement poudreux (14) est dans la pompe, et pour évacuer le chargement poudreux (14) à terre à l'aide du dit air comprimé.

10. Méthode selon la revendication 9, **caractérisée en ce que** pendant l'évacuation du chargement poudreux (14) un flux constant d'air comprimé est introduit.

11. Méthode selon la revendication 9, **caractérisée en ce que** le chargement poudreux (14) dans une partie basse de la pompe (16) est fluidifié à l'aide d'une disposition adjacente de fluidification (32) pour conduire le chargement poudreux à une sortie de déchargement (26).

12. Méthode selon les revendications 9 à 11, **caractérisée en ce que** le chargement poudreux (14) qui est bloqué dans la pompe est poussé par de l'air à l'aide d'air provenant d'un certain nombre de buses montées à l'intérieur de la pompe (16), et **en ce que** les buses fournissent de l'air via une entrée d'air (22) dans la pompe.
